(19) Europäisches Patentamt

European Patent Office

Office européen des brevets

(11) **EP 0 969 264 A2**

(12) **EUROPÄISCHE PATENTANMELDUNG**

(43) Veröffentlichungstag:
05.01.2000 Patentblatt 2000/01

(51) Int. Cl.⁷: **G01B 7/16**

(21) Anmeldenummer: **99107634.0**

(22) Anmeldetag: **16.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.05.1998 DE 19820005**
**04.02.1999 DE 19904472**

(71) Anmelder:
**Dr. Johannes Heidenhain GmbH**
**83292 Traunreut (DE)**

(72) Erfinder:
• **Braasch, Jan, Dr.**
**83352 Altenmarkt (DE)**
• **Günther, Torsten**
**84558 Kirchweidach (DE)**

Bemerkungen:
Die Anmeldung wird, wie ursprünglich eingereicht, unvollständig veröffentlicht (Art. 93 (2) EPÜ).Es fehlen die Figuren 5,6,7a-7b

(54) **Flächiger Sensor, Anordnung des flächigen Sensors und Verfahren zur Kompensation thermischer Verformungen**

(57)    Zur Kompensation sich temperaturabhängig ausdehnender Baugruppen wird erfindungsgemäss soll ein flächiger Sensor benutzt werden, der spezielle Strukturelemente mit temperaturabhängiger elektrischer Leitfähigkeit über die gesamte zu messende Länge aufweist. Dies weist den Vorteil auf, daß die Temperatur über dem gesamten Sensor gemessen wird. Diese Strukturelemente werden zu Spuren zusammengeschaltet und mit einer auf dem Sensor integrierten Elektronik verbunden. Der Sensor weist auf der Rückseite eine Klebeschicht auf, wodurch er einfach auf das zu messende Bauteil aufgeklebt werden kann. Die Länge des Sensors kann aufgrund der verteilten Strukturelemente durch einfaches Abschneiden beliebig eingestellt werden. Als Schutz wird nach der Montage eine Schutzschicht auf den Sensor aufgeklebt. Derartige Sensoren werden weiterhin erfindungsgemäss an sich verformenden Maschinenteilen von Werkzeugmaschinen angeordnet, um die Temperatur, die für die Masshaltigkeit von Bedeutung ist, zu ermitteln. Die Sensoren werden dabei parallel zu der erwarteten thermischen Verformungsrichtung angeordnet. Durch die Wahl dieser Sensoren kann die Anzahl benötigter Sensoren im Vergleich zum Stand der Technik verringert werden. Weiterhin bieten diese Sensoren den Vorteil, dass nur einfache, lineare Berechnungen erforderlich sind, um eine genaue Kompensation der thermischen Verformung der Werkzeugmaschine zu erreichen. Die ermittelten Kompensationssignale werden anschliessend Lageregelkreisen der Werkzeugmaschine zugeleitet.

Fig. 2

EP 0 969 264 A2

**Beschreibung**

Die vorliegende Erfindung betrifft einen flächigen Sensor gemäß dem Oberbegriff des Anspruches 1, ein Verfahren zur Anpassung für einen speziellen Anwendungsfall gemäß dem Oberbegriff des Anspruches 14, eine Verwendung nach dem Oberbegriff des Anspruchs 18, eine Anordnung zur Kompensation thermischer Verformungen nach dem Oberbegriff des Anspruchs 19 sowie ein Verfahren zur Durchführung der Kompensation nach dem Oberbegriff des Anspruchs 26.

Aus der EP 349 783 B1 ist bekannt, daß Temperaturen an Werkzeugmaschinen ermittelt werden, um deren temperaturabhängige Ausdehnung zu ermitteln und zu kompensieren. Für die temperaturabhängige Ausdehnung ist dabei jeweils der gesamte Temperaturverlauf über dem sich ausdehnenden Maschinenteil zu erfassen. Dies wird dadurch ermöglicht, daß ein Widerstand benutzt wird, der sich in der Ausdehnungsrichtung des Maschinenteils erstreckt und der einen intensiven thermischen Kontakt zum Maschinenteil aufweist. Der verwendete Widerstand weist dabei ein zur mittleren Temperatur und damit zur Gesamtausdehnung proportionales Ausgangssignal auf. Zur Kontaktierung sind an den beiden Enden des Widerstands entsprechende Kontaktelemente vorgesehen.

Dabei ist von Nachteil, daß für jede benötigte Länge ein individueller Widerstand bereitgestellt werden muß. Weiterhin können Störeffekte, die den Widerstand beeinflussen und das Meßergebnis verfälschen, wie z.B. Alterung, nicht kompensiert werden.

Aus dem Artikel „Temperatureinflüsse auf die Werkzeugmaschinen-Genauigkeit" von Reto Gruber und Wolfgang Knapp, erschienen in „Werkstatt und Betrieb", Ausgabe 131 (1998) 11, ist bekannt, dass die Erwärmung einer Werkzeugmaschine deren Verformungen und damit Ungenauigkeiten zur Folge hat. In der neuen Prüf-Norm ISO/DIS 230-3 werden daher thermische Verformungen einer Werkzeugmaschine ermittelt und zur Beurteilung deren Genauigkeit benutzt. Eine derartige Erwärmung erfolgt im wesentlichen durch den Betrieb der Werkzeugmaschine, bei dem sich insbesondere das Festlager der Spindel erwärmt und die Wärme von dort aus in die gesamte Werkzeugmaschine weitergeleitet wird.

Im oben genannten Artikel wird lediglich das Problem und die in der ISO/DIS 230-3 vorgesehene Prüfung, um thermische Verformungen qualitativ zu erfassen, diskutiert.

Aufgabe der vorliegenden Erfindung ist es daher, einen Sensor anzugeben, der die genannten Nachteile vermeidet, der universell einsetzbar und kostengünstig zu produzieren ist. Weiterhin soll ein einfaches Verfahren zur individuellen Anpassung des Sensors an individuelle Gegebenheiten angegeben werden. Darüber hinaus soll eine Anordnung von erfindungsgemässen Sensoren angegeben werden, um eine Temperaturverteilung, durch die eine Verformung der Werkzeugmaschine verursacht wird, mit einer minimalen Anzahl von Sensoren zu erfassen. Diese Anordnung soll universell einsetzbar und kostengünstig zu produzieren sein. Weiterhin soll ein einfaches Verfahren zur Kompensation thermischer Verformungen unter Nutzung der Ausgangssignale der Anordnung angegeben werden.

Diese Aufgabe wird durch einen Sensor mit den Merkmalen des Anspruches 1, durch eine Verfahren zu dessen Anpassung gemäß den Merkmalen des Anspruches 14, durch eine Verwendung gemäß den Merkmalen des Anspruch 18, durch eine Anordnung mit den Merkmalen des Anspruches 19 sowie durch eine Verfahren zur Kompensation gemäß den Merkmalen des Anspruches 26 gelöst.

Weitere vorteilhafte Ausgestaltungen ergeben sich aus den jeweiligen abhängigen Ansprüchen.

Erfindungsgemäß besteht der Sensor aus mehreren Spuren, die jeweils miteinander verbundene Strukturelemente mit temperaturabhängiger elektrischer Leitfähigkeit aufweisen. Dabei bestehen die unterschiedlichen Spuren aus mindestens zwei unterschiedlichen Materialien mit unterschiedlicher Temperaturabhängigkeit ihrer Leitfähigkeit. Weiterhin vorteilhaft ist, daß bei einem vierspurigen Sensor auch bei einer Längenänderung kein neuer Abgleich in der Auswerteelektronik erforderlich wird. Die Ausgangssignale des Sensors sind längenunabhängig.

Das Verfahren weist den Vorteil auf, daß aufgrund der Parallelschaltung der Strukturelemente die Widerstandselemente mit temperaturabhängiger Leitfähigkeit gleichmäßig über die gesamte Länge des Sensors verteilt sind, wodurch die Möglichkeit besteht, den Sensor besonders einfach in der benötigten Länge abzuschneiden. Weiterhin wird dadurch vorteilhaft die Temperatur über der gesamten Sensorlänge gemessen.

Erfindungsgemäss besteht die Anordnung zur Temperaturkompensation aus mehreren länglichen Temperatursensoren, die an den Maschinenteilen der Werkzeugmaschine angeordnet sind, die bei einer Verformung eine Relativverschiebung zwischen Werkzeug und Werkstück der Werkzeugmaschine bewirken. Aufgrund der länglichen Struktur der Temperatursensoren kann durch nur wenige Temperatursensoren eine Verformung der Geometrie der Werkzeugmaschine wegen thermischer Verformung ermittelt und kompensiert werden, so dass keine Verschlechterung des Arbeitsergebnisses durch Temperaturschwankungen vorliegt. Aufgrund der über die gesamte Sensorfläche integrierten Temperaturverteilung in den eine Verschiebung zwischen Werkstück und Werkzeug verursachenden Komponenten einer Werkzeugmaschine kann die Verschiebung sehr genau bestimmt werden, ohne daß dafür komplizierte Modelle der Werkzeugmaschine und/oder der Temperaturverteilung berechnet werden müssen. Vorteilhaft sind nur einfache lineare Berechnungen zur Kompensation der thermischen Verformung erforderlich. Durch die Verwendung des länglichen Temperatursensors ist keine Berücksichtigung der Wärmeverteilung abhängig von der Zeit erforderlich.

Weiterhin wird zur Messung der Ausdehnung des Auslegers der Werkzeugmaschine nur ein einziger Temperatursensor benötigt.

Weitere Vorteile sowie Einzelheiten des erfindungsgemäßen Sensors, der erfindungsgemässen Anordnung sowie des erfindungsgemäßen Verfahrens ergeben aus der nachfolgenden Beschreibung der Ausführungsbeispiele anhand der Zeichnungen. Dabei zeigt:

Figur 1     eine erste Realisierungsmöglichkeit des erfindungsgemäßen flächigen Sensors mit zwei Spuren in Reihe geschalteter Strukturelemente und Auswerteelektronik,

Figur 2     einen Längsschnitt durch einen erfindungsgemäßen flächigen Sensor mit Auswerteelektronik,

Figur 3     eine zweite Realisierungsmöglichkeit des erfindungsgemäßen flächigen Sensors mit vier Spuren parallel geschalteter Strukturelemente mit Auswerteelektronik und

Figur 4     eine weitere Realisierungsmöglichkeit des erfindungsgemäßen flächigen Sensors mit vier Spuren parallel geschalteter Strukturelemente

Figur 5     eine erste Realisierungsmöglichkeit der erfindungsgemässen Anordnung bei einer C-Typ Werkzeugmaschine bei Referenztemperatur,

Figur 6     die C-Typ Werkzeugmaschine aus Figur 5, die sich aufgrund Wärmeentwicklung im Festlager erwärmt hat,

Figur 7a     die Verformung der Achsen abhängig von der Betriebsdauer einer C-Typ Werkzeugmaschine ohne Kompensation und

Figur 7b     die Verformung der Achsen abhängig von der Betriebsdauer einer C-Typ Werkzeugmaschine mit Kompensation.

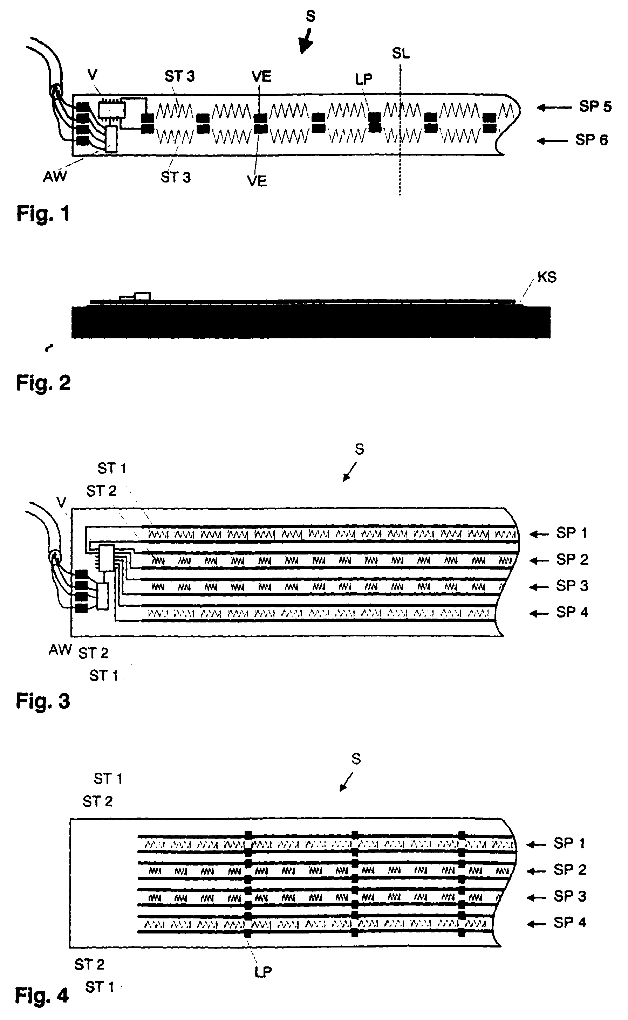

Im folgenden ersten Ausführungsbeispiel gemäss Fig. 1 — 4 wird von einer Anwendung des erfindungsgemässen Sensors als Temperatursensor ausgegangen und zunächst der Sensor an sich beschrieben.

Fig. 1 zeigt einen flächigen Temperatursensor S zum Aufkleben auf die Oberfläche eines Maschinenteils, dessen thermische Dehnung bestimmt werden soll. Der Sensor S besteht aus einer ersten Spur SP5, die sich aus in Reihe geschalteten Strukturelementen ST3 mit einer temperaturabhängigen elektrischen Leitfähigkeit zusammensetzt. Die einzelnen Strukturelemente ST3 werden über Verbindungselemente in Form von Lötpads VE, die jeweils zwischen zwei Strukturelementen ST3 angeordnet sind, verbunden. Die zweite Spur SP6 ist identisch zur ersten ausgebildet und zur ersten Spur SP5 benachbart angeordnet.

Weiterhin sind auf der Seite mit der Zuleitung elektronische Baugruppen angedeutet, die eine Verstärkung V und/oder eine Auswertung AW des Ausgangssignals des Sensors S durchführen.

Die Länge des Sensors S übersteigt meist die vom Anwender benötigte Länge. In diesem Fall kann der Anwender die nicht benötigte Länge des Sensors S einfach entlang einer Schnittlinie SL abtrennen. Dies erfolgt im wesentlichen senkrecht zu den Spuren SP5 und SP6. Auf diese besonders anwenderfreundliche und einfache Art kann die Länge des Sensors S vom Benutzer eingestellt werden. Dabei ist darauf zu achten, daß nur auf der Länge des Sensors S mit Strukturelementen ST3 eine Temperaturmessung erfolgt, auf der Länge des Sensors S mit den elektronischen Baugruppen V und AW erfolgt keine Temperaturmessung.

Anschließend sind die beiden nunmehr am Ende des Sensors S gelegenen Verbindungselemente VE durch einen Lötpunkt LP oder eine andere elektrisch leitende Verbindung zu überbrücken, wie in Fig. 1 dargestellt.

Die Befestigung des Sensors S erfolgt mittels der in Fig. 2 dargestellten wärmeleitenden Klebeschicht KS auf der Rückseite des Sensors S an dem Maschinenteil. Als Klebeschicht KS kann vorteilhaft Preciment verwendet werden.

Anschließend besteht die Möglichkeit eine Schutzschicht auf den Sensor S aufzubringen, beispielsweise indem man eine Folie entsprechender Dicke und Festigkeit über den Sensor S klebt. Dadurch wird ein Schutz, beispielsweise gegen mechanische oder chemische Beschädigung, erreicht.

Fig. 3 zeigt eine alternative Realisierung des erfindungsgemäßen flächigen Sensors S. Es sind vier Spuren Sp1 bis SP4 vorgesehen, wobei die erste und vierte Spur SP1 und SP4 und die zweite und dritte Spur SP2 und SP3 jeweils aus einer Parallelschaltung von Strukturelementen ST1 und ST2 über der gesamten Sensorlänge bestehen. Zumindest die Strukturelemente ST1 und ST2 sollen dabei aus Material bestehen, welches eine unterschiedliche Abhängigkeit der elektrischen Leitfähigkeit von der Temperatur aufweist. Die Ausgangssignale aller Spuren SP1, SP2, SP3 und SP4 werden zunächst einer Auswerteschaltung AW zugeleitet, in der die Ausgangssignale in einer Brücke, insbesondere einer Wheatstone-Brücke, verschaltet werden und anschließend werden die Ausgangssignale der Brükkenschaltung einem Verstärker V zugeleitet.

Die dabei benötigten elektronischen Baugruppen für Verstärker V und Auswertung AW können auf dem Sensor S integriert ausgeführt sein, wie in Fig. 3 dargestellt. Dadurch kann eine geringere Empfindlichkeit gegen elektromagnetische Störungen und dem unvermeidlichen Rauschen erreicht werden.

Im Gegensatz zu einer punktuellen Temperaturmessung, beispielsweise mit einzelnen temperaturabhängigen Widerständen, liefert der flächige Sensor den genauen Mittelwert der Temperatur im vom Sensor überdeckten Bereich. Da bei konstantem Ausdehnungskoeffizienten die Gesamtdehnung der mittleren Temperatur proportional ist, sind zeitlich zurückliegende Temperaturmessungen, wie sie bei anderen Verfahren benötigt werden, mit dem erfindungsgemäßen Sensor S nicht erforderlich.

Der temperaturabhängige ohmsche Widerstand eines metallischen Leiters, wie er für die Strukturelemente ST1, ST2 und ST3 verwendet wird, berechnet sich aus dem spezifischem Widerstand $\rho$ des Materials, der Länge L, der Querschnittsfläche A, dem Temperaturkoeffizienten $\alpha$ und der Temperaturdifferenz $\Delta T$.

$$R = \rho \cdot \frac{L}{A} \cdot (1 + \alpha \cdot \Delta T)$$

Nimmt man an, daß die breiten horizontalen Leiterbahnen einer beliebigen Spur SP1, SP2, SP3, SP4 aus der Fig. 1 bzw. die Verbindungselemente VE der Spuren SP5 oder SP6 aus der Fig. 3 keinen Einfluß auf den Gesamtwiderstand eines Strukturelements ST1, ST2, oder ST3 haben, so kann der Widerstand einer Spur SP1, SP2, SP3, SP4, SP5 oder SP6 aus der Parallelschaltung der einzelnen Strukturelements ST1, ST2, oder der Reihenschaltung der Strukturelemente ST3 berechnet werden. Im folgenden soll näher auf die interessantere Parallelschaltung der als temperaturabhängige Widerstände dienenden Strukturelemente ST1 und ST2 aus Fig. 3 eingegangen werden. Mit der Anzahl n der Strukturelemente ST1, ST2 berechnet sich der Widerstand einer der Spuren SP1, SP2, SP3, SP4 zu:

$$R = \rho \cdot \frac{L}{n \cdot A} \cdot (1 + \alpha \cdot \Delta T)$$

Die mittlere Temperatur kann mit dem flächigen Sensor aus Fig. 3 besonders vorteilhaft gemessen werden, wenn die vier Spuren SP1, SP2, SP3 und SP4 in einer Wheatstonschen Brücke verschaltet werden. Dadurch wird erreicht, daß Störungen mittels der Brückenschaltung kompensiert werden.

Bezeichnet man die Widerstände der Spuren SP1 bis SP4 mit R1 bis R4, gilt für die Brückenschaltung:

$$U_a = U_e \cdot \left[ \frac{R2}{R1+R2} - \frac{R4}{R3+R4} \right]$$

Bei der Wheatstone-Brücke bilden R1 und R2 einen ersten Spannungsteiler und R3 und R4 einen zweiten, parallelgeschalteten Spannungsteiler. Die Ausgangsspannung $U_a$ wird als Spannungsdifferenz zwischen den Verbindungspunkten von R1, R2 und R3, R4 gemessen. Die Versorgungsspannung $U_e$ wird an R1 und R3 angelegt, R2 und R4 liegen an Masse. Verwendet man für die Strukturelemente ST1 und ST2 unterschiedliche Materialien mit unterschiedlichen Kenngrößen und ordnet man den Kenngrößen der Strukturelemente ST1 den Index a und den Kenngrößen der Strukturelemente ST2 den Index b zu, so ergibt sich die Ausgangsspannung $U_a$ der Brückenschaltung abhängig von der Eingangsspannung $U_e$ zu:

$$\frac{U_a}{U_e} = \frac{\rho_a \cdot \frac{L_a}{n \cdot A_a} \cdot (1 + \alpha_a \cdot \Delta T)}{\rho_a \cdot \frac{L_a}{n \cdot A_a} \cdot (1 + \alpha_a \cdot \Delta T) + \rho_b \cdot \frac{L_b}{n \cdot A_b} \cdot (+ \alpha_b \cdot \Delta T)} -$$

$$- \frac{\rho_b \cdot \frac{L_b}{n \cdot A_b} \cdot (1 + \alpha_b \cdot \Delta T)}{\rho_b \cdot \frac{L_b}{n \cdot A_b} \cdot (1 + \alpha_b \cdot \Delta T) + \rho_a \cdot \frac{L_a}{n \cdot A_a} \cdot (1 + \alpha_a \cdot \Delta T)}$$

Unter den vereinfachenden Annahmen, daß

- der Temperaturkoeffizient $\alpha_b$ gegenüber $\alpha_a$ vernachlässigbar klein ist,
- alle Strukturelemente ST1 und ST2 bei Raumtemperatur den gleichen Widerstand haben und
- die temperaturabhängige Änderung des Widerstands gering gegenüber dem Gesamtwiderstand ist,

gilt:

$$U_a = U_e \cdot \left[ \frac{\rho_a \cdot \frac{L_a}{A_a} \cdot \alpha_a \cdot \Delta T}{\rho_a \cdot \frac{L_a}{A_a} + \rho_b \cdot \frac{L_b}{A_b}} \right] = U_e \cdot \left[ \frac{\rho_a \cdot \frac{L_a}{A_a} \cdot \alpha_a}{\rho_a \cdot \frac{L_a}{A_a} + \rho_b \cdot \frac{L_b}{A_b}} \right] \cdot \Delta T$$

Daß der Temperaturkoeffizient $\alpha_b$ des Materials für erste Strukturelemente ST1 vernachlässigbar klein ist gegenüber dem Temperaturkoeffizienten $\alpha_a$, wird durch eine geeignete Wahl der Materialien, aus denen die Strukturelemente ST1 und ST2 bestehen, erreicht. Hier ist besonders die Kombination Konstantan mit Temperaturkoeffizient $\alpha_b$ für die Strukturelemente ST1 und Kupfer mit Temperaturkoeffizient $\alpha_a$ für die Strukturelemente ST2 geeignet. Daß alle Strukturelemente ST1 und ST2 bei Raumtemperatur den gleichen Widerstand haben wird durch die Wahl der Länge La, Lb und Querschnitt Aa, Ab erreicht. Daß die Änderung des temperaturabhängigen Teils des Widerstands gering gegenüber dem Gesamtwiderstand ist, ist aufgrund der gegenüber 1 kleinen Temperaturkoeffizient $\alpha_a$ und $\alpha_b$ ohnehin der Fall.

Die Brückenspannung ist gemäß obiger Gleichung somit unabhängig von der Anzahl n der nach dem Abschneiden übrigen Strukturelemente ST1 und ST2. Ein individuelles Kalibrieren des Verstärkers V abhängig von der Länge des Sensors S beim Anwender ist dadurch nicht erforderlich.

Bei Verwendung des erfindungsgemäßen Sensors S als Dehnungssensor dürfen die sogenannten Vorzugsrichtungen der Strukturelemente ST1, ST2, ST3 der Spuren SP1, SP2, SP3 und SP4 des Sensors aus Fig. 3 oder SP5 und SP6 des Sensors aus Fig. 1 nicht senkrecht zur Dehnungsrichtung ausgerichtet sein. Eine optimale Empfindlichkeit des Sensors S gegenüber Dehnung erreicht man, wenn die Spuren SP1 bis SP4 bzw. SP5 und SP6 parallel zur Dehnungsrichtung verlaufen. Dies ist durch die spezielle Leitungsführung in den Strukturelementen ST1, ST2 und ST3 gemäß Fig. 1 und Fig. 3 begründet.

In der vorangegangenen Beschreibung wurde davon ausgegangen daß die elektronischen Baugruppen zumindest zur Verstärkung der Sensorausgangssignale auf dem Sensor S integriert angeordnet sind. Alternativ dazu besteht die Möglichkeit, daß die elektronischen Baugruppen und der eigentliche Sensor S, bestehend nur aus den Spuren SP1 bis SP4 bzw. SP5 und SP6, als getrennte Baugruppen gemäß Fig. 4 ausgestaltet sind. Dann besteht die vorteilhafte Möglichkeit den Sensor S in großen Mengen am Stück herzustellen und erst für die spezielle Anwendung, beispielsweise von einer Rolle, abzutrennen.

Dies hat den Vorteil, daß kein Abfall entstehen würde und die Herstellung des Sensors S wesentlich einfacher und kostengünstiger wäre.

Die elektronischen Baugruppen, insbesondere der Verstärker V, können dann entweder über Kabel mit dem Sensor S verbunden werden oder diese werden unmittelbar an einem Ende der Spuren SP1 bis SP4 bzw. SP5 und SP6 mit dem Sensor S leitend verbunden. Hierfür können die in Fig. 1 dargestellten Verbindungselemente VE benutzt werden oder es werden, wie in Fig. 4 dargestellt, für den Sensor S aus Fig. 3 die breiten Leiterbahnen, durch die die Strukturelemente ST1 und ST2 parallelgeschaltet werden, für eine Verbindung benutzt. Falls die Breite der Leiterbahnen nicht ausreichen sollte für eine Kontaktierung, können, wie in Fig. 4 dargestellt, in regelmäßigen Abständen zusätzliche Lötpunkte LP vorgesehen werden, an denen der Sensor S mit der Auswerteelektronik (V, AW) verbunden wird.

Im folgenden zweiten Ausführungsbeispiel wird gemäss den Fig 5 — 7b von einer Anwendung der erfindungsgemässen Temperatursensors zur Kompensation thermischer Verformungen bei einer vertikalen Werkzeugmaschine ausgegangen. Die Anwendung bei Bearbeitungszentren oder anderen Werkzeugmaschinen mit ähnlicher Struktur ist aber ebenfalls möglich.

Die Figur 5 zeigt eine erfindungsgemässe Anordnung der länglichen Temperatursensoren 7.1, 7.2, und 7.3 sowie eines punktförmigen Temperatursensors 7.4 an einer vertikalen Werkzeugmaschine. In der Figur 5 ist die Werkzeugmaschine bei Referenztemperatur dargestellt. Aufgrund der Struktur der Maschine, bestehend aus dem Maschinenbett 2 mit dem Maschinentisch 1, dem Gestell 3 und dem Ausleger 4, welche die Form eines C aufweist, ist die dargestellte, vertikale Werkzeugmaschine den sogenannten C-Typ Maschinen zugehörig. Bei diesem Maschinentyp treten thermische Verformungen der Struktur im wesentlichen aufgrund der im Betrieb unvermeidlichen Erwärmung im Festlager 5 der Spindel auf. Diese Erwärmung steigt mit zunehmender Bearbeitungszeit und Spindeldrehzahl an.

Besonders HSC-Spindeln mit Drehzahlen von 100.000 U/min und mehr weisen daher mit steigender Betriebsdauer thermische Verformungen auf.

Die während dem Betrieb im Festlager 5 entstehende Wärme wird durch die Maschinenstruktur über den Ausleger 4 zum Gestell 3 weitergeleitet. In der Regel wird das Maschinenbett 2 und der Maschinentisch 1 nicht mehr wesentlich erwärmt, da das Maschinenbett 2 mit dem Fundament verbunden ist, über das die Wärme abgeleitet wird. Ausserdem dauert es relativ lange, bis die im Festlager 5 erzeugte Wärme bis zum Maschinenbett 2 weitergeleitet wurde. Dadurch weisen nicht mehr alle Maschinenkomponenten die gleiche Temperatur auf, sondern es entsteht eine ungleichmässige Temperaturverteilung in der Maschine. Da die Maschinenkomponenten in der Regel aus metallischen Werkstoffen bestehen, wird die Wärme gut weitergeleitet und die einzelnen Maschinenkomponenten weisen eine temperaturabhängige Ausdehnung auf.

Zwischen dem Maschinentisch 1, auf dem das zu bearbeitende Werkstück eingespannt ist und den die Wärme des Festlagers 5 praktisch nicht mehr erreicht, und dem Berührpunkt 6 des Werkstücks mit dem Werkzeug, dem sogenannten Tool-Center-Point TCP, erfolgt aufgrund der thermischen Verformung der Maschinenstruktur eine Verschiebung. Diese kann nicht durch die vorhandenen Meessysteme ausgeglichen werden, da diese bei einem beweglichen Maschinentisch die Bewegung des Maschinentisches 1 relativ zum Maschinenbett 2 messen. Eine Verschiebung des Berührpunktes 6 relativ zum Maschinentisch 1 und damit zum Werkstück wird bisher nicht berücksichtigt.

Erfindungsgemäss werden an den Maschinenkomponenten, die sich im Betrieb der Werkzeugmaschine erwärmen und die die relative Position des Berührpunktes 6 zum Maschinentisch 1 bestimmen, Temperatursensoren 7.1, 7.2, 7.3 und 7.4 vorgesehen. Dadurch wird es möglich, über die Temperatur eine thermische Verformung der für die Relativposition von Berührpunkt 6 zu Maschinentisch 1 relevanten Maschinenkomponenten zu ermitteln und zu kompensieren.

Bei einer C-Typ Maschine werden die Temperatursensoren 7.1, 7.2, 7.3, 7.4 dabei am Festlager 5, am Ausleger 4 und am Gestell 3 angeordnet.

Durch die Temperatursensoren 7.1, 7.2, 7.3, 7.4 wird jeweils eine Spannung ausgegeben, die sich proportional zu der Temperatur der Temperatursensoren 7.1, 7.2, 7.3, 7.4 ändert. Aus der Ausgangsspannung der Temperatursensoren 7.1, 7.2, 7.3, 7.4 kann daher unter Berücksichtigung eines Offsetwerts und einer Proportionalitätskonstanten die Temperatur berechnet werden. Die für die Berechnung benutzte Auswerteelektronik kann dabei sowohl in den jeweiligen Temperatursensor integriert als auch separat realisiert werden.

Eine im folgenden benötigte Referenztemperatur To kann beliebig festgelegt werden, insbesondere vorteilhaft derart, daß bei der Referenztemperatur To möglichst alle Temperatursensoren 7.1, 7.2, 7.3 und 7.4 eine Ausgangsspannung von 0 Volt aufweisen. Dadurch werden absolute Temperatursensoren 7.1, 7.2, 7.3 und 7.4 realisiert, in deren Ausgangssignal kein Offsetwert der Ausgangsspannung berücksichtigt werden muss.

Sobald die gesamte Werkzeugmaschine diese Referenztemperatur aufweist, beispielsweise durch einen Aufenthalt in einer Klimakammer, werden verschiedene Abmessungen der Werkzeugmaschine mit hoher Genauigkeit bestimmt, die für die folgenden Berechnungen benötigt werden. Diese sind:

- Der Abstand LS zwischen dem Spindelende, an dem das Werkzeug eingespannt wird, und dem thermischen Fixpunkt der Spindel in Richtung der Z-Achse. Dabei ist der thermische Fixpunkt als der Punkt definiert, von dem aus sich die Spindel bei einer Temperaturänderung in Richtung der ±Z-Achse verformt.
- Die Länge LA des Auslegers 4 in Richtung der Y-Achse zwischen dem thermischen Fixpunkt der Spindel und dem Anfang des Gestells 3.
- Der Hebelarm HA des Auslegers 4. Dieser bestimmt sich aus der Strecke in Richtung der Y-Achse zwischen dem thermischen Fixpunkt der Spindel und dem Drehpunkt, um den sich der Ausleger 4 bei einer thermischen Verformung des Gestells 3 dreht.
- Der Abstand LT zwischen den beiden am Gestell 3 angeordneten Temperatursensoren 7.1 und 7.2.
- Die Abmessung LGz des Gestells 3 in Richtung der Z-Achse.

Diese Messgrössen müssen nur einmalig zur Ermittlung von Referenzwerten bestimmt und dann gespeichert werden.

Durch den Temperatursensor 7.2 wird die Temperatur Tz des Gestells 3 auf der dem Ausleger 4 zugewandten Seite und durch den Temperatursensor 7.1 wird die Temperatur Ta des Gestells 3 auf der dem Ausleger 4 abgewandten Seite gemessen. Aufgrund der nicht vernachlässigbaren Breite des Gestells 3 und des Temperaturverlaufs in der Maschinenstruktur beim Betrieb müssen die Verformungen des Gestells 3 für die dem Ausleger 4 zugewandte und abgewandte Seite berechnet werden. Die thermisch bedingte Verformung ΔZz für die dem Ausleger 4 zugewandte bzw. ΔZa für die dem Ausleger 4 abgewandte Seite des Gestells 3 in Richtung der Z-Achse wird nach Gleichung (1a) und (1b) berechnet aus dem Produkt der Temperaturabweichung von der Referenztemperatur mit dem Ausdehnungskoeffizienten des Gestellmaterials multipliziert mit der Länge des Gestells 3 LG in Richtung der Z-Achse zu:

$$\Delta Zz = (Tz - To) * \text{Ausdehnungskoeffizient} * LGz \tag{1a}$$

$$\Delta Za = (Ta - To) * \text{Ausdehnungskoeffizient} * LGz \tag{1b}$$

Durch den Temperatursensor 7.3 wird die Temperatur T des Auslegers 4 im wesentlichen zwischen dem thermischen Fixpunkt der Spindel und dem Gestell 3 gemessen. Aus dem Produkt der Temperaturdifferenz zwischen der gemessenen Temperatur T und der Referenztemperatur To und dem Ausdehnungskoeffizienten des Auslegermaterials multipliziert mit der Länge LA des Auslegers 4 in Richtung der Y-Achse, wird nach Gleichung (2) die Verformung des Auslegers 4 in Richtung des Y-Achse berechnet:

$$\Delta Y = (T - To) * \text{Ausdehnungskoeffizient} * LA \tag{2}$$

Im herkömmlichen Betrieb wird durch den punktförmigen Temperatursensor 7.4 die Temperatur des Festlagers 5 der Spindel ermittelt. Dabei wird davon ausgegangen, daß das Festlager 5 die einzige, für die thermische Verformung wesentliche Wärmequelle ist. Aufgrund der durch den Temperatursensor 7.4 ermittelten Temperatur T wird die Verformung zwischen dem thermischen Fixpunkt und dem Spindelende, an dem das Werkzeug eingespannt wird, parallel zur Z-Achse nach Gleichung (3) berechnet:

$$\Delta Zs = (T - To) * \text{Ausdehnungskoeffizient} * LS \tag{3}$$

Die bei einer Erwärmung in —Z-Richtung erfolgende Ausdehnung der Spindel wird somit aus der Temperaturdifferenz zwischen einer Referenztemperatur To und der aktuellen Temperatur T, multipliziert mit dem Ausdehnungskoeffizienten des Spindelmaterials und dem Abstand LS zwischen Spindelende und dem thermischen Fixpunkt der Spindel berechnet.

Zusätzlich wird die Position des Spindelendes der C-Typ Werkzeugmaschine durch die thermische Verformung des Gestells 3 verschoben. Durch eine ungleichmässige Verformung des Gestells 3 wird der Ausleger 4 nicht nur gemäß Gleichung 1b in Richtung der Z-Achse um $\Delta Za$ verschoben, sondem auch um die X-Achse verdreht. Dies führt ebenfalls zu einer Verschiebung des Berührungspunktes 6 zwischen Werkzeug und Werkstück. Aus der Summe von $\Delta Za$ und dem Produkt von Hebelarm HA des Auslegers 4 und der Differenz der Ausdehnungen $\Delta Zz$ und $\Delta Za$ des Gestells 3 dividiert durch den Abstand LT zwischen den Temperatursensoren 7.1 und 7.2 am Gestell 3 wird nach Gleichung (4) die Verschiebung $\Delta Zv$ in Richtung der Z-Achse berechnet:

$$\Delta Zv = \Delta Za + HA * (\Delta Zz - \Delta Za) / LT \tag{4}$$

Von der Verschiebung der Spindel in Richtung der —Z-Achse ist daher eine Verschiebung der Spindel aufgrund einer Verformung des Gestells 3 zu subtrahieren und es ergibt sich nach Gleichung (5) für die insgesamt resultierende Verformung in Richtung der Z-Achse:

$$\Delta Z = \Delta Zs - \Delta Zv \tag{5}$$

Derart kann für die Y- und Z-Achse separat (eine C-Typ Werkzeugmaschine weist wegen deren Symmetrie zur X-Achse praktisch keine thermische Verformung parallel zur X-Achse auf) die thermisch bedingte Verformung aufgrund der mit den Temperatursensoren 7.1 bis 7.4 ermittelten Temperaturen der Maschinenteile besonders einfach bestimmt werden. Die erforderlichen Berechnungen gemäss den Gleichungen (1a) bis (5) zur Kompensation der thermischen Verformung werden in einer Auswerteeinheit durchgeführt und die derart für die einzelnen Achsen ermittelten Kompensationssignale dem Lageregler der jeweiligen Achse zugeleitet. Vorteilhaft kann als Auswerteeinheit die ohnehin an jeder Werkzeugmaschine vorhandene numerische Steuerung mitbenutzt werden, da nur in relativ grossen Zeitabständen, z.B. eine Minute, eine neue Berechnung gemäss den unkomplizierten Gleichungen (1) bis (5) erfolgt.

In Figur 6 ist eine C-Typ Werkzeugmaschine nach ca. 6 Stunden im wesentlichen ununterbrochener Betriebsdauer dargestellt. Aufgrund der im Festlager 5 entstandenen Wärme, die vom Festlager 5 über den Ausleger 4 bis zum Gestell 3 weitergeleitet wird, weisen die Maschinenkomponenten einen Temperaturgradienten ungleich Null auf und verformen sich entsprechend unterschiedlich.

Eine mögliche qualitative Verformung der Werkzeugmaschine ohne erfindungsgemässe Kompensation wird in Figur 7a für die einzelnen Achsen dargestellt. Die grafisch dargestellten Messungen sind gemäss ISO/DIS 230-3 erfolgt. Ausgehend von der Referenztemperatur, bei der keine Verformung in einer der drei Achsen X, Y oder Z vorliegt, wurde der Spindelmotor in Betrieb genommen und die relative Verschiebung L zwischen dem Spindelende und einem Fixpunkt auf dem Maschinenschlitten gemessen. Der Spindelmotor dreht dabei mit ca. 6000 Umdrehungen pro Minute.

Man erkennt, daß in Richtung der X-Achse nur eine Verschiebung L geringer als 5 μm vorliegen. Dies ist

wesentlich durch die symmetrische Struktur der C-Typ Werkzeugmaschine bezüglich der X-Achse begründet. Prinzipiell ist mit der erfindungsgemässen Lösung aber auch eine Kompensation von Verformungen der Werkzeugmaschine parallel zur X-Achse möglich. Hierfür wären an zwei Seiten des Gestells 3, die einen Temperaturunterschied aufweisen, mindestens je ein länglicher Temperatursensor parallel der Y-Achse in der YZ-Ebene erforderlich.

Die Verschiebung L in Richtung der Y-Achse steigt mit zunehmender Betriebsdauer auf bis ca. 30 µm an, da sich die Temperatur des Auslegers 4 aufgrund der Wärmeentwicklung im Festlager 5 erhöht und der Ausleger 4 dadurch im wesentlichen länger wird. Die Verschiebung L in Richtung der Z-Achse ändert sich über dem gesamten betrachteten Zeitraum relativ stark, da sich zunächst die Spindel in der Länge verformt und dann — aufgrund der ungleichmässigen Erwärmung des Gestells 3 - der Ausleger 4 mit Spindel nach oben verformt wird. Die daraus resultierende Verschiebung L hat auch nach 8 Stunden Betriebsdauer noch keinen stationären Zustand erreicht, wie Figur 7a zu entnehmen ist.

Das bedeutet, daß bei einer Teile-Fertigung mit hoher Genauigkeit die Werkzeugmaschine permanent nachjustiert werden muss, da die in Figur 7a aufgetragene Verschiebung L zwischen Spindelende und dem Maschinentisch 1, sich unmittelbar im Produkt auswirken.

In Figur 7b liegt der gleiche Betrieb vor wie in Figur 7a (quasi permanenter Betrieb des Spindelmotors bei 6000 U/min). Die mit der erfindungsgemässen Anordnung und nach dem erfindungsgemässen Verfahren berechneten Verformungen werden jedoch kompensiert, beispielsweise durch Aufschalten des Kompensationssignals auf einen Lageregler oder eine Lagevorsteuerung. Man erkennt sofort, dass die nach der erfindungsgemässen Kompensation noch verbleibenden Verschiebungen L in allen Achsen auf einen Bereich von ca. 0 bis 5 µm reduziert werden. Dadurch entfällt ein permanentes Nachjustieren der Werkzeugmaschine, das in einer Fertigung nicht ohne erheblichen Aufwand möglich wäre.

## Patentansprüche

1.  Flächiger Sensor zur Temperatur und/oder Dehnungsmessung insbesondere eines Maschinenteils oder einer Längen- oder Winkelmeßeinrichtung, der mindestens ein Strukturelement (ST1, ST2, ST3) mit temperaturabhängiger elektrischer Leitfähigkeit aufweist, wobei die Strukturelemente (ST1, ST2, ST3) über die gesamte Länge des Sensors (S) gleichmäßig verteilt angeordnet sind, dadurch gekennzeichnet, daß mindestens zwei Spuren (SP1, SP2, SP3, SP4, SP5, SP6), bestehend aus miteinander verbundenen Strukturelementen (ST1, ST2, ST3), vorgesehen sind.

2.  Flächiger Sensor nach Anspruch 1, dadurch gekennzeichnet, daß die Strukturelemente (ST3) einer Spur (SP5, SP6) in Reihe geschaltet sind.

3.  Flächiger Sensor nach Anspruch 1 oder 2, dadurch gekennzeichnet, daß zwischen zwei Strukturelementen (ST3) ein elektrisches Verbindungselement (VE) vorgesehen ist, wodurch die zwei Spuren (SP5, SP6) miteinander verbunden werden können.

4.  Flächiger Sensor nach Anspruch 3, dadurch gekennzeichnet, daß als elektrisches Verbindungselement (VE) für die zwei Spuren ein Lötpunkt (LP) vorgesehen ist.

5.  Flächiger Sensor nach Anspruch 1, dadurch gekennzeichnet, daß die Strukturelemente (ST1, ST2) einer Spur (SP1, SP2, SP3, SP4) parallelgeschaltet sind.

6.  Flächiger Sensor nach Anspruch 1 oder 5, dadurch gekennzeichnet, daß die Strukturelemente (ST1, ST2) der mindestens zwei Spuren (SP1, SP2, SP3, SP4) aus mindestens zwei unterschiedlichen Materialien bestehen.

7.  Flächiger Sensor nach einem der Ansprüche 1 bis 6, dadurch gekennzeichnet, daß auf der Rückseite des Sensors (S) eine Klebeschicht (KS) zum Verkleben mit einem zu messenden Bauteil vorgesehen ist und daß die Klebeschicht (KS) besonders wärmeleitfähig ist.

8.  Flächiger Sensor nach einem der Ansprüche 1 bis 7, dadurch gekennzeichnet, daß auf der Vorderseite des Sensors (S) im montierten Zustand eine Schutzschicht aufgeklebt wird, wodurch der Sensor (S) vor Beschädigung geschützt wird.

9.  Flächiger Sensor nach einem der Ansprüche 1 bis 8, dadurch gekennzeichnet, daß der Sensor (S) an einem Ende elektronische Baugruppen (V, AW) beinhaltet.

10. Flächiger Sensor nach Anspruch 9, dadurch gekennzeichnet, daß die elektronischen Baugruppen eine Verstärkerschaltung (V) beinhalten.

11. Flächiger Sensor nach Anspruch 9 oder 10, dadurch gekennzeichnet, daß die elektronischen Baugruppen eine Auswerteschaltung (AW) beinhalten.

12. Flächiger Sensor nach einem der Ansprüche 1 oder 5 bis 11, dadurch gekennzeichnet, daß der Sensor (S) vier Spuren (SP1, SP2, SP3, SP4) beinhaltet, wobei die Strukturelemente (ST1) zweier Spuren (SP1, SP4) aus einem ersten und die Strukturelemente (ST2) zweier Spuren (SP2, SP3) aus einem zweiten Material gefertigt sind.

13. Flächiger Sensor nach Anspruch 12, dadurch gekennzeichnet, daß die vier Spuren (SP1, SP2, SP3, SP4) in der Auswerteschaltung (AW) zu einer Brücke verschaltet werden.

14. Verfahren zur individuellen Anpassung eines flächigen Sensors nach einem der Ansprüche 1 bis 13, dadurch gekennzeichnet, daß eine nicht mehr benötigte Länge des Sensors (S) entlang einer Schnittlinie (SL) an dem Ende des Sensors (S) abgeschnitten wird, das keine elektronischen Baugruppen (V, AW) aufweist.

15. Verfahren zur individuellen Anpassung eines flächigen Sensors nach einem der Ansprüche 2 bis 4, dadurch gekennzeichnet, daß an dem Ende des Sensors (S) der keine elektronischen Baugruppen (V, AW) aufweist, die beiden Spuren (SP5, SP6) durch die elektrischen Verbindungselemente (VE, LP) miteinander verbunden werden.

16. Verfahren zur Herstellung eines Sensors nach den Ansprüchen 1 bis 8 und 12, dadurch gekennzeichnet, daß der Sensor (S) in Form eines langen Bandes gefertigt wird, wodurch der Anwender die benötigte Sensorlänge von dem langen Band abtrennen kann.

17. Verfahren nach Anspruch 16, dadurch gekennzeichnet, daß der Anwender elektronische Baugruppen (V, AW) mit dem Sensor (S) über bereits vorhandene Verbindungselemente (VE, LP) verbindet.

18. Verwendung des Sensors nach einem der Ansprüche 1 bis 17, dadurch gekennzeichnet, daß der Sensor (S) zur Messung einer Dehnung benutzt wird und daß die Längsrichtung der Spuren (SP1, SP2, SP3, SP4, SP5, SP6) des Sensors (S) im wesentlichen senkrecht zu der zu messenden Dehnung angeordnet werden.

19. Anordnung zur Kompensation thermischer Verformungen an Werkzeugmaschinen unter Verwendung von Temperatursensoren (7.1, 7.2, 7.3, 7.4) zur Temperaturmessung an mindestens einem Maschinenteil (3, 4, 5), dadurch gekennzeichnet, daß an den Maschinenteilen (3, 4, 5), die sich im Betrieb erwärmen und die den Abstand zwischen Werkzeug und Maschinentisch (1) festlegen, Temperatursensoren (7.1, 7.2, 7.3, 7.4) vorgesehen sind und daß an Maschinenteilen (3, 4) mit Längserstreckung längliche Temperatursensoren (7.1, 7.2, 7.3) vorgesehen sind, die parallel zur erwarteten Verformungsrichtung ausgerichtet sind.

20. Anordnung nach Anspruch 19, dadurch gekennzeichnet, daß an einem Festlager (5) einer Spindel der C-Typ Werkzeugmaschine mindestens ein punktförmiger Temperatursensor (7.4) angeordnet ist.

21. Anordnung Anspruch 19 oder 20, dadurch gekennzeichnet, daß an einem Ausleger (4) der C-Typ Werkzeugmaschine mindestens ein länglicher Temperatursensor (7.4) parallel zur Y-Achse angeordnet ist, der zumindest einen grossen Teil der Erstreckung des Auslegers (4) parallel zur Y-Achse abdeckt.

22. Anordnung nach einem der Ansprüche 19 bis 21, dadurch gekennzeichnet, daß an einem Gestell (3) der C-Typ Werkzeugmaschine mindestens ein länglicher Temperatursensor (7.1, 7.2) parallel zur Z-Achse angeordnet ist, der zumindest einen grossen Teil der Erstreckung des Gestells (3) parallel zur Z-Achse abdeckt.

23. Anordnung nach einem der Ansprüche 19 bis 22, dadurch gekennzeichnet, daß die Temperatursensoren (7.1, 7.2, 7.3, 7.4) über eine gut wärmeleitende Verbindung mit den Maschinenteilen (3, 4, 5) verbunden sind.

24. Anordnung nach einem der Ansprüche 19 bis 23, dadurch gekennzeichnet, daß die Temperatursensoren (7.1, 7.2, 7.3, 7.4) mit einer Auswerteeinheit verbunden sind.

25. Anordnung nach einem der Ansprüche 19 bis 24, dadurch gekennzeichnet, daß eine Schutzschicht über die Temperatursensoren (7.1, 7.2, 7.3, 7.4) aufgebracht wird, wodurch die Temperatursensoren (7.1, 7.2, 7.3, 7.4) vor Beschädigung und vor Wärmeeinstrahlung geschützt werden.

26. Verfahren zur Kompensation thermischer Verformungen an Werkzeugmaschinen, bei dem aus den Ausgangssignalen der integrierenden Temperatursensoren (7.1, 7.2, 7.3, 7.4) Durchschnittstemperaturen von einzelnen Maschinenteilen (3, 4, 5) berechnet werden, aus den Durchschnittstemperaturen thermische Verformungen der Werkzeugmaschine mittels linearer Gleichungen für jede Achse berechnet werden und Kompensationssignale für die Lageregelung der einzelnen Achsen erzeugt werden.

27. Verfahren nach Anspruch 26, dadurch gekennzeichnet, daß ein maschinenbezogenes Koordinatensystem aufgespannt wird, dessen Z-Achse parallel zur Längserstreckung der Spindel und dessen Y-Achse parallel zur Längserstreckung des Auslegers (4) ausgerichtet ist.

28. Verfahren nach Anspruch 26 oder 27, dadurch gekennzeichnet, daß in einem Referenzierschritt für die Kompensationsberechnung benötigte Abmessungen der Werkzeugmaschine ermittelt werden, wenn alle Maschinenkomponenten eine konstante Temperatur aufweisen.

29. Verfahren nach einem der Ansprüche 26 bis 28, dadurch gekennzeichnet, daß für die dem Ausleger (4) zugewandte und abgewandte Seite des Gestells (3) eine Verformung parallel zur Z-Achse berechnet wird.

30. Verfahren nach einem der Ansprüche 26 bis 29, dadurch gekennzeichnet, daß für den Ausleger (4) eine thermische Verformung parallel zur Y-Achse berechnet wird.

31. Verfahren nach einem der Ansprüche 26 bis 30, dadurch gekennzeichnet, daß für die Spindel eine thermische Verformung parallel zur Z-Achse berechnet wird.

32. Verfahren nach einem der Ansprüche 26 bis 31, dadurch gekennzeichnet, daß die Verdrehung des Gestells (3) aufgrund dessen unterschiedlicher thermischen Verformung und daraus eine Verschiebung der Spindel berechnet wird.

33. Verfahren nach einem der Ansprüche 26 bis 32, dadurch gekennzeichnet, daß für jede relevante Achse die thermischen Verformungen aufsummiert und als Kompensationssignal für die Lageregelung bereitgestellt werden.

**Fig. 1**

**Fig. 2**

**Fig. 3**

**Fig. 4**